# EUROPEAN PATENT APPLICATION

(11) **EP 1 553 491 A1**
(43) Date of publication of application: **13.07.2005**
(21) Application number: 03754129.9
(22) Date of filing: 15.10.2003
(51) Int. Cl.: G06F 9/06, G06F 12/14

(54) **INFORMATION TERMINAL DEICE AND OPERATION CONTROL METHOD THEREOF**

(30) Priority: 18.10.2002 JP 2002304813
(71) Applicant: TOYOTA JIDOSHA KABUSHIKI KAISHA, Toyota-shi, Aichi 471-8571 (JP); MATSUSHITA ELECTRIC INDUSTRIAL CO., LTD., Kadoma-shi, Osaka 571-8501 (JP)
(72) Inventor: HIRAMATSU, Norimasa, c/o Toyota Jidosha K.K., Toyota-shi, Aichi 471-8571 (JP); KUMON, Hitoshi, c/o Toyota Jidosha K.K., Toyota-shi, Aichi 471-8571 (JP); YASUDA, Takehiko, Yokohama-shi, Kanagawa 224-0029 (JP); MATSUDA, Noriyuki, Machida-shi, Tokyo 194-0033 (JP)
(74) Representative: Winter, Brandl, Fürniss, Hübner, Röss, Kaiser, Polte Partnerschaft Patent- und Rechtsanwaltskanzlei
(86) International application number: PCT/JP2003/013182
(87) International publication number: WO 2004/036415

(57) **Abstract**

The present invention is directed to an information terminal device. A memory card 14 stores a serial number MID of the memory card 14 and a MID register program for registering the serial number MID in the information terminal device 10. At starting the information terminal device 10, the MID register program is downloaded from the installed memory card 14 and the serial number MID stored in the memory card 14 is stored in a non-volatile flash ROM 30 in accordance with the program. Then, the MID register program is cleared out of the memory card 14 and the MID register program on a SDRAM 32 downloaded to the information terminal device 10 is made invalid. Such processing prevents the serial number of the memory card 14 from being thereafter stored in the other information terminal device 10.

## Description

### TECHNICAL FIELD

The present invention relates to an information terminal device, an operation control of it, an identification information storing program, a storage medium on which the identification information storing program is stored, a predetermined information changing program, a terminal operating program, a storage medium on which the terminal operating program is stored, and a center. In particular, the present invention relates to an information terminal device, etc., advantageously suited for updating information of programs, etc., by way of the distribution using the storage medium.

### BACKGROUND ART

As a state of the art, JP 2002-139326 A, for example, discloses a system, in which the program stored in a storage medium such as CD-ROM, which is installed detachably in an information terminal device, is read out. The program thus read out is stored in an internal memory, and the program thus stored in the internal memory is executed on the information terminal device. In such a system, in order to update the program stored in the internal memory of the information terminal device, in the information terminal device is installed a storage medium which stores a new program for an updating operation, and the power source of the information terminal device is switched on. Then, in the information terminal device, the version of the program already stored in the internal memory is compared with the version of the program stored in the storage medium newly installed. If the program stored in the storage medium newly installed is newer, then the program stored in the storage medium is automatically read out to the information terminal device, and is overwritten in the internal memory. Therefore, according to the above-mentioned conventional system, the program stored in the internal memory of the information terminal device can be automatically updated by installing in the information terminal device a storage medium with the upgraded program.

In the above-mentioned conventional system, as previously mentioned, renewal of a program is carried out according to the comparison result of the version of the program already stored in the internal memory, and the version of the program stored in the storage medium newly installed. In this system, it is possible to update the program stored in the information terminal device, as long as the storage medium newly installed has a version newer than the version of the program already stored in the information terminal device, even though the storage medium newly installed has already provided the other information terminal devices with the program. That is, when the storage medium, from which the program therein has been read out to an information terminal device of his/her own, is installed in other information terminal devices, the program will be easily provided to other information terminal devices. For this reason, with the above-mentioned conventional system, a situation where the business which provides the upgraded program for pay is not realized may arise.

### DISCLOSURE OF INVENTION

It is an object of the present invention to provide an information terminal device, an operation control of it, an identification information storing program, a storage medium on which the identification information storing program is stored, a predetermined information changing program, a terminal operating program, a storage medium on which the terminal operating program is stored, and a center, in which it is made possible to prevent the provision of the predetermined information from one storage medium to a plurality of the information terminal devices.

In order to achieve the above-mentioned objects, according to a first aspect of the present invention, an information terminal device is provided which includes a first internal memory for storing identification information to identify a storage medium, which identification information is read from the storage medium which is detachably installed in the information terminal device.

Further, according to a second aspect of the present invention, a method of operating an information terminal device is provided which includes identification information storing step for storing identification information for identifying a storage medium in a first internal memory of the information terminal device, which identification information is read from the storage medium which is detachably installed in the information terminal device.

Further, according to a third aspect of the present invention, an identification information storing program is provided for causing an information terminal device in which a storage medium is detachably installed to execute operations, which operations include a first operation of reading identification information from the storage medium for identifying the storage medium; and a second operation of storing the identification information read in the first operation in an internal memory.

Further, according to a fourth aspect of the present invention, a storage medium on which the identification information storing program as claimed in claim 19 is stored is provided.

In aforementioned aspect of the present invention, identification information for identifying a storage medium is read from the storage medium. The identification information is stored in a first internal memory or an internal memory. After such processing has been executed, the information terminal device can be provided with any information via a specific one storage medium installed therein, while the information terminal device cannot be provided with information via other storage media. Therefore, according to the present invention, the number of the storage media from which the information terminal device can be provided with information is limited to only one, and the information terminal device and the storage medium are associated with in a one-to-one relationship.

Advantageously, the information terminal device according to the aforementioned first aspect of the present invention includes storing operation control means for permitting a storing operation of storing the identification information in the first internal memory if the identification information is not stored in the first internal memory, and for forbidding or limiting the storing operation after the identification information has been stored in the first internal memory. Further, the method of operating an information terminal device according to the aforementioned second aspect of the present invention, includes a storing operation controlling step for permitting a storing operation of storing the identification information in the first internal memory in the identification information storing step if the identification information is not stored in the first internal memory, and for forbidding or limiting the storing operation in the identification information storing step after the identification information has been stored in the first internal memory. With this arrangement, after the identification information of the specific storage medium has been stored in the information terminal device, the identification information is prevented from being stored in other information terminal devices.

Advantageously, the storing operation control means permits the storing operation of storing the identification information in the first internal memory if the identification information is not stored in the first internal memory, before predetermined information different from the identification information is read from the storage medium. Similarly, in the storing operation controlling step, the storing operation of storing the identification information in the first internal memory is permitted if the identification information is not stored in the first internal memory, before predetermined information different from the identification information is read from the storage medium. With this arrangement, it is possible to store the identification information of the storage medium from which the information terminal device is provided with information, before the predetermined information is read from the storage medium.

Furthermore, the storing operation control means may permit the storing operation of storing the identification information in the first internal memory under a predetermined condition even if the identification information is stored in the first internal memory. Similarly, in the storing operation controlling step the storing operation of storing the identification information in the first internal memory may be permitted under a predetermined condition even if the identification information is stored in the first internal memory. With this arrangement, even after the identification information of the storage medium from which the information terminal device is provided with information has been stored in the first internal memory, it is possible to store the identification information of the storage medium from which the information terminal device is provided with information again, under a predetermined condition, such as a condition where storage medium becomes lost.

Further, according to a fifth aspect of the present invention, the information terminal device includes a second internal memory for storing predetermined information different from the identification information read from a storage medium which is detachably installed in the information terminal device; and storage information controlling means which replaces the predetermined information stored in the second internal memory with predetermined information on the storage medium now installed in the information terminal device if the identification information of the storage medium now installed corresponds to the identification information already stored in the first internal memory.

Similarly, the method of operating an information terminal device includes a predetermined information storing step for storing predetermined information, which is different from the identification information, in a second internal memory of the information terminal device, which predetermined information is read from a storage medium which is detachably installed in the information terminal device; and a storage information controlling step for replacing the predetermined information stored in the second internal memory by the predetermined information storing step with predetermined information on the storage medium now installed in the information terminal device if the identification information of the storage medium now installed corresponds to the identification information already stored in the first internal memory.

Similarly, according to a fifth aspect of the present invention, a predetermined information changing program is provided for causing an information terminal device in which a storage medium is detachably installed to execute operations, which operations include a first operation of determining whether identification information for identifying the storage medium, which has already been stored in a first internal memory of the information terminal device, corresponds to the identification information of the storage medium now installed in the information terminal device; and a second operation of replacing predetermined information, which is different from the identification information, stored in the second internal memory with predetermined information on the storage medium now installed in the information terminal device if both identification information is determined to corresponds each other in the first operation

In this fifth aspect of the present invention, predetermined information different from the identification information, which is read from the storage medium is detachably installed in the information terminal device, is stored in the second internal memory of the information terminal device. The predetermined information stored in the second internal memory is modified to the predetermined information on the storage medium now installed in the information terminal device, if the identification information already stored in a first internal memory corresponds to the identification information of the storage medium now installed in the information terminal device. Therefore, since the predetermined information is read to the information terminal device only from its corresponding storage medium, it is prevented that the predetermined information is read from other storage medium corresponding to other information terminal device.

Advantageously, the information terminal device includes information executing means which executes an operation according to the predetermined information stored in the second internal memory, wherein the storage information controlling means causes the second internal memory to store the predetermined information on the storage medium now installed in the information terminal device under a predetermined condition when the identification information is not stored in the first internal memory.

Similarly, the method of operating an information terminal device includes an information executing step for operating the information terminal device according to the predetermined information stored in the second internal memory, wherein the storage information controlling step causes the second internal memory to store the predetermined information on the storage medium now installed in the information terminal device under a predetermined condition when the identification information is not stored in the first internal memory.

With this arrangement, under a predetermined condition, such as under a condition for checking the information terminal device at the plant of manufacturing the information terminal device, even if the identification information is not stored in the first internal memory of the information terminal device, the predetermined information is read to the information terminal device from the storage medium installed therein and is stored in the second memory, thus enabling the information terminal device to operate according to the predetermined information even in such a case.

From a similar viewpoint, according to a sixth aspect of the present invention, a terminal operating program as well as a storage medium on which the terminal operating program is stored are provided for causing an information terminal device in which a storage medium is detachably installed to execute operations, which operations includes a first operation of determining whether identification information for identifying the storage medium is stored in a first internal memory; a second operation of storing predetermined information on the storage medium, which is now installed in the information terminal device, in a second internal memory of the information terminal device under a predetermined condition when it is determined in the first operation that the identification information is not stored in the first internal memory; and a third operation of causing the information terminal device to operate according to the predetermined information stored in the second internal memory by way of the second operation.

Advantageously, the information terminal device includes uploading means which supplies information about modification of the predetermined information in the second internal memory to a predetermined center. Similarly, the method of operating an information terminal device includes an uploading step for supplying information about modification of the predetermined information in the second internal memory to a predetermined center from the information terminal device. With this arrangement, since the information about modification of the predetermined information in the second internal memory is managed in the predetermined center, for example, at the loss of the predetermined information from the information terminal device, the information terminal device can read the predetermined information according to the modification information managed in the predetermined center.

From a similar viewpoint, according to a seventh aspect of the present invention, a center is provided which includes information management means for storing information supplied from an information terminal device, said information being about modification of predetermined information stored in an internal memory of an information terminal device, information providing means for providing the information about modification of the predetermined information managed under the information management means under a predetermined condition.

Advantageously, the information terminal device includes installation urging means which executes an operation to urges the installation of the storage medium when the installed storage medium, from which the predetermined information is read, is detached from the information terminal device. Similarly, the method of operating an information terminal device includes an installation urging step for executing an operation to urges the installation of the storage medium when the installed storage medium, from which the predetermined information is read, is detached from the information terminal device. With this arrangement, the installation of the storage medium into the information terminal device is encouraged when the information terminal device executes the processing of the predetermined information, resulting in the prevention of loss of the storage medium.

In this case, the installation urging means may stop at least a part of operation, and similarly, in the installation urging step, at least a part of operation of the information terminal device may be stopped.

According to a eighth aspect of the present invention, a information terminal device is provided which includes program reading means for reading the identification information storing program from the storage medium as claimed in claim 19 which is detachably installed in the information terminal device; predetermined information storing means for storing a predetermined information read by the program reading means in an internal memory according to the predetermined information storing program; and program deleting means for deleting the predetermined information storing program on the storage medium after the predetermined information has been stored in the internal memory by the predetermined information storing means.

In this aspect, the information terminal device reads from the storage medium detachably installed therein an identification information storing program which is configured to cause the information terminal device to execute a first operation of reading the identification information for identifying the storage medium; and a second operation of storing the identification information read in the first operation in an internal memory, and then according to the identification information storing program the information terminal device reads the identification information from installed the storage medium and stores it in the internal memory. Then, the identification information storing program is cleared out of the storage medium. With this arrangement, since the identification information storing program is deleted from the storage medium after having been stored in the information terminal device, it become impossible for the storage medium to provide the information terminal device the identification information storing program, and thus the identification information of the storage medium, which has been stored in one information terminal device, is prevented from being read or stored in other information terminal devices. Thus, the information terminal device and the storage medium are associated with in a one-to-one relationship, and thus the information provision from one storage medium to two or more information terminal devices is prevented.

Advantageously, the program deleting means also deletes the identification information storing program read from the storage medium by the program reading means. With this arrangement, after the identification information of one storage medium has been stored according to the identification information storing program read from the storage medium, the identification information storing program is deleted. Therefore, the situation in which it is possible to store the identification information of other storage medium using the identification information storing program read previously is avoided.

Advantageously, the program reading means reads the identification information storing program before predetermined information different from the identification information is read from the storage medium. With this arrangement, the predetermined information is prevented from being read before reading the identification information storing program and storing the identification information in the internal memory, and thus to the information terminal device is read the predetermined information only from the specific storage medium.

Other objects, features and advantages of the present invention will become more apparent from the following detailed description when read in conjunction with the accompanying drawings.

### BRIEF DESCRIPTION OF THE DRAWINGS

Fig. 1 is a diagram for illustrating one embodiment of a system configuration according to the present invention.
Fig. 2 is a block diagram of an information terminal device according to this embodiment.
Fig. 3 is a timing chart for illustrating the upgrading operation of the program in the system of this embodiment.
Fig. 4 is a timing chart for illustrating the upgrading operation of the program in the system of this embodiment.
Fig. 5 is a flow chart of a main routine executed on the information terminal device of this embodiment.
Fig. 6 is a flow chart of a subroutine executed on the information terminal device of this embodiment.
Fig. 7 is a flow chart of a subroutine executed on the information terminal device of this embodiment.
Fig. 8 is a flow chart of a control routine executed on the information terminal device of this embodiment for registering a serial number of a storage medium.

### BEST MODE FOR CARRYING OUT THE INVENITON

Hereafter, the preferred embodiments according to the present invention are explained with reference to the drawings.

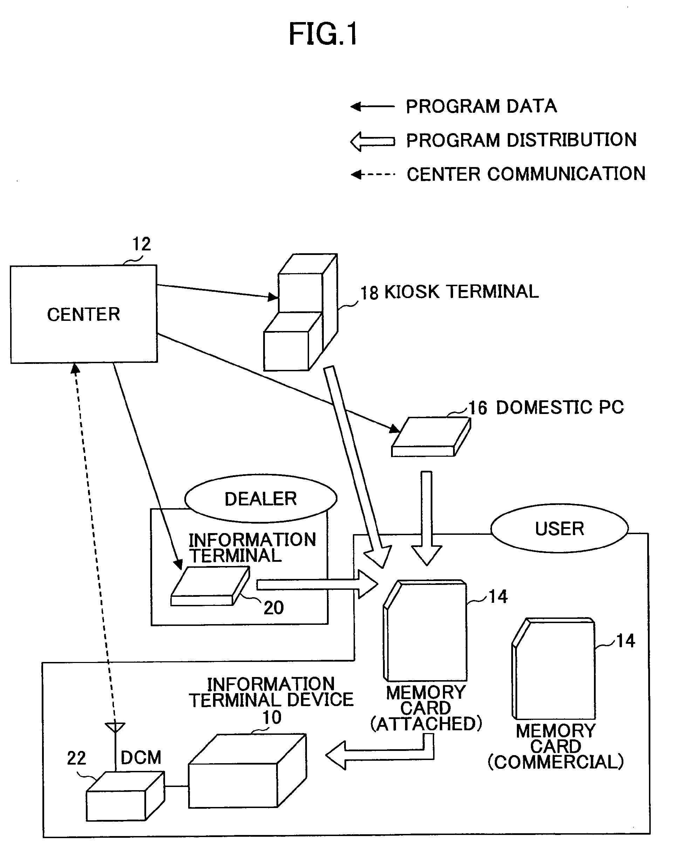

Fig. 1 shows one embodiment of a system configuration according to the present invention. The system of this embodiment is equipped with an information terminal device 10 installed in a vehicle, and a center 12 which manages the information, etc., distributed to the information terminal device 10. The system is a system which provides services such as provisions of distributed map data, performances of distributed music, etc., for a passenger of the vehicle by way of the information terminal device 10.

The information terminal device 10 has a memory card slot (not shown) into which memory cards 14 such as SD (Secure Digital) card can be inserted. The memory card 14 is installed detachably in the memory card slot. The memory card 14 has predetermined storage capacity as a storage medium such that it can store various programs, such as a required application program for operating the information terminal device 10, map data stored in a database of the center 12, music name for 3000 music, singer names, etc., among music data. In addition, the memory card 14 has the physical write protect function to make writing operation impossible even if it is installed in the memory card slot. The information terminal device 10 receives distribution of various programs, map data, music data, etc., from the memory card 14 installed in the memory card slot, and thereafter operates according to the distribution programs and data.

It is noted that one memory card 14 is attached to the information terminal device 10 as an accessory at the time of purchase. For this reason, under normal circumstances the information terminal device 10 receives a program and distribution of data using this attached memory card 14; however it is also possible to receive distribution using a commercial memory card 14. To the memory cards 14 coming with each information terminal device 10, and all the commercial memory cards 14, an identification number (called "a serial number MID" hereafter) unique to each memory card is given, and this serial number MID is stored therein.

The center 12 can establish the communication connection with a personal computer 16 a user has, a KIOSK terminal 18 installed in a convenience store, an information terminal 20 installed in a car dealer, etc. Whenever various programs, music data, etc. are updated (versioned up), the center 12 supplies these new programs etc. to the personal computer 16, KIOSK terminal 18, and the information terminal 20 as appropriate. The personal computer 16 etc. has the memory card slot into which the memory card 14 can be inserted, and when the memory card 14 is installed in the memory card slot, it executes operations to store an updating program etc. in the memory card 14. That is, the memory card 14 used with the information terminal device 10 is constituted so as to enable write or overwrite of programs or data stored therein using the personal computer 16, the KIOSK terminal 18, or the information terminal 20.

The center 12 is provided with a storage section. The center 12 memorizes a program version corresponding to a member number of a user in the storage section thereof in order to manage the member number of each user who purchased an information terminal device 10, and the version of a program distributed to a user associated therewith. For example, in the case where the information terminal device has a program of a version set "1.0" when a user purchases the information terminal device 10, the version of the program "1.0" will be memorized in the center 12 as a result of the user registration in the center 12 that may be implemented, for example, on startup of the information terminal device 10. If a version up processing of the program to a version "2.0" is executed by the user after that, the version of the program memorized in the center 12 will be set to "2.0". It is noted that the version of the program memorized in the center 12 includes the version of the program purchased by the user (called "a purchase version" hereafter), and the version of the program actually stored in a user's information terminal device 10 (called "a use version" hereafter).

The information terminal device 10 is provided with a data communication module (DCM) 22, and is constituted to establish a direct communication with the center 12 via the DCM 22 using an existing communication line. The above-mentioned memory card 14 is constituted to enable a DCM program required for operating the DCM 22 to be written upon as a program. The DCM 22 becomes operable when the DCM program has been downloaded from the memory card 14 installed in the memory card slot.

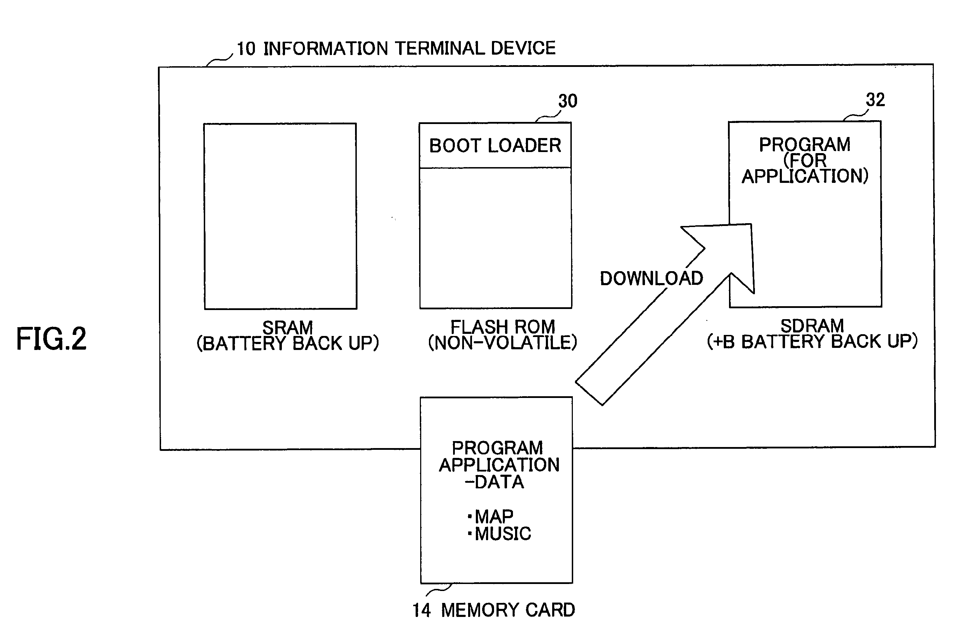

Fig. 2 shows a block diagram of the information terminal device 10 of this embodiment. In this embodiment, the information terminal device 10 has a main CPU (not shown), a non-volatile flash ROM 30, and a SDRAM 32 powered by way of a battery power source provided in the vehicle. The boot loader executed at the power up of the information terminal device 10 is incorporated in the flash ROM 30 in advance. Moreover, no program is memorized in the SDRAM 32 at first, but the program read from the memory card 14 installed in the information terminal device 10 is memorized.

Next, operations of the system of this embodiment are explained.

In this embodiment, as a part of the information terminal device 10, the program which executes applications, such as navigation and online karaoke, is not stored in SDRAM 32 at the time of purchase, as a component of the information terminal device 10. For this reason, a user cannot use the information terminal device 10 in the condition as it is immediately after the purchase. On the other hand, the application program etc. is stored in the attached memory card 14. Therefore, in using the information terminal device 10, a user needs to install the attached memory card 14 in the memory card slot at first.

If the information terminal device 10 is started up with the memory card 14 having been installed in the memory card slot, the boot loader stored in the flash ROM 30 will be executed first. When the boot loader is executed at the first starting up time after the purchase, the application program stored in the installed memory card 14 will be downloaded from the memory card 14 to be stored in SDRAM 32. When the application program is stored in SDRAM 32, henceforth, the information terminal device 10 will execute operations according to the program on the SDRAM 32, and will function as navigation equipment, karaoke equipment, etc.

It is noted that the storing operation to the SDRAM 32 of the application program stored in the memory card 14 may be carried out not only at the first starting up time after the purchase, but also at the time when the application program etc., which had been stored in the SDRAM 32, is not held normally due to disconnection of a vehicle battery power source etc.

The application program required to operate the information terminal device 10 and the DCM program required to operate the DCM 22 are usually upgraded by modification of an operation function etc. A user is provided with the upgraded program for pay through the KIOSK terminal 18 etc. from the center 12.

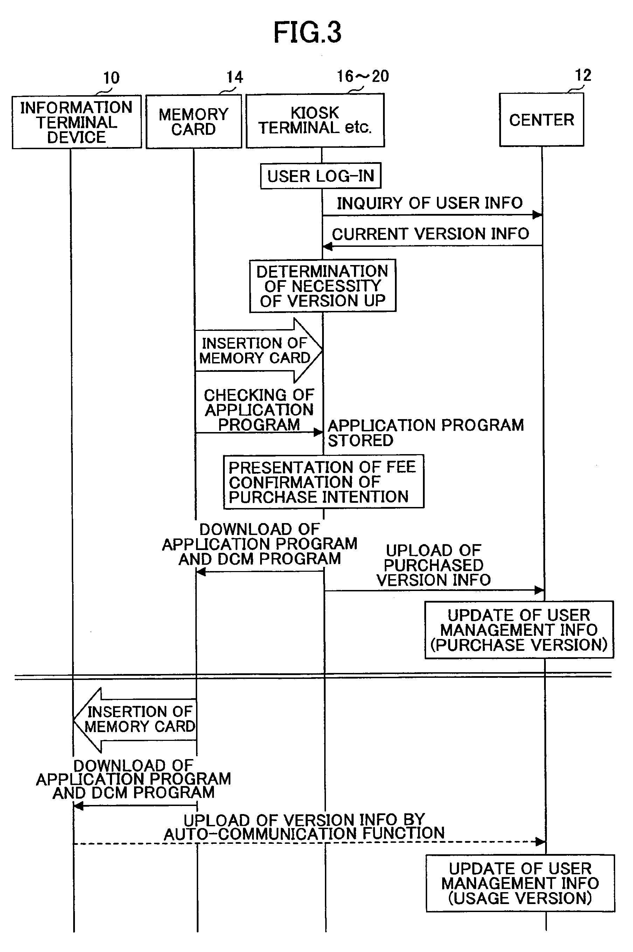

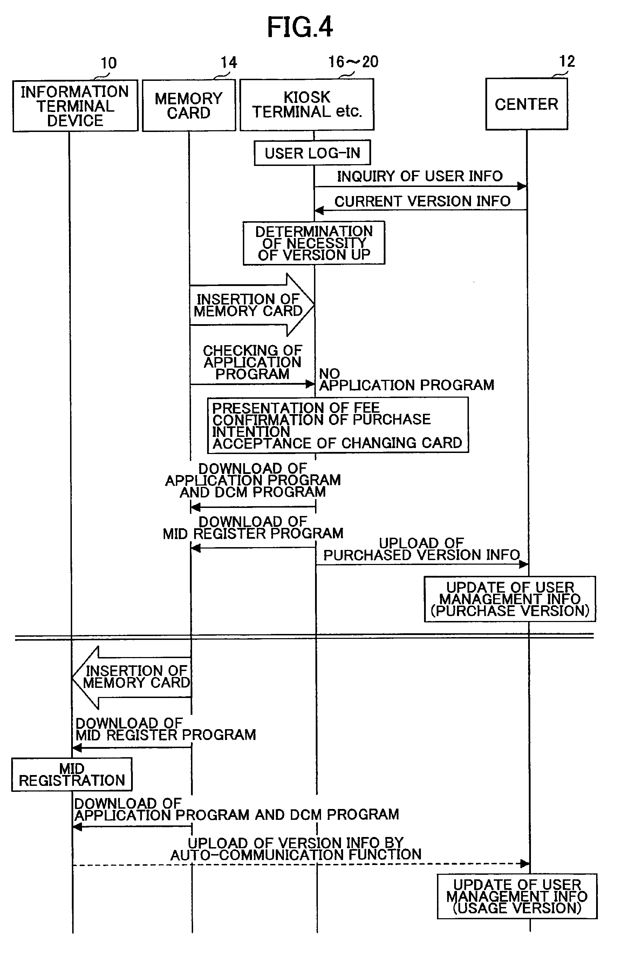

Specifically, Fig. 3 and Fig. 4 show a timing chart of an operation for upgrading the program in the system of this embodiment. When upgrading a program after user registration, first, a user logs in the center 12 using a personal computer 16, KIOSK terminal 18, or the information terminal 20, and makes an inquiry about version information of his/her own. The center 12 supplies the version information of the program of his/her own memorized at present in response to the inquiry of the version information from the KIOSK terminal 18, etc.

Whenever the program is upgraded, the new program is suitably supplied to the KIOSK terminal 18 etc. from the center 12. That is, the KIOSK terminal 18 etc. always stores the program of the latest version. KIOSK terminal 18 etc. determines whether version up is required by comparing the version information in the center 12 with the information on the latest version stored therein, when the current version information memorized in the center 12 returned in response to the inquiry of the version information to the center 12 is received. Specifically, when the version in the center 12 is not the latest version, it will be determined that the version up is necessary. Then, the KIOSK terminal 18 etc. shows a user the result of the determination.

When a user determines the version up of the program, based on the determination result of the KIOSK terminal 18 etc. indicating that the version up is necessary, the user may install the memory card 14 used for the information terminal device 10 in the memory card slot. If the version up is necessary and the memory card 14 is installed in the memory card slot, then the KIOSK terminal 18 etc. determines whether the application program required to operate the information terminal device 10 is stored in the memory card 14.

If the application program required to operate the information terminal device 10 is stored in the memory card 14, the KIOSK terminal 18 etc. determines that this memory card 14 is the memory card attached to the information terminal device 10 or the commercial memory card having the application program stored therein previously, and then the KIOSK terminal 18 etc. makes sure the purchase intention of the user, after showing the user the fee for purchasing the program of the latest version, as shown in Fig. 3. At this time, the fee shown is a balance for the difference between the version in the center 12 and the latest version, for example, under the situation that the latest version is "2.0", when a user's version memorized in the center 12 is "1.0", the balance for the difference between "2.0" and "1.0" is shown. Moreover, when the user's version memorized in the center 12 is "1.1" which is improved version based on "1.0", the balance for the difference between "2.0" and "1.1" is shown.

If the intention of the user for purchasing the latest program is confirmed under the condition where it is determined that the application program is stored in the memory card 14, the KIOSK terminal 18 etc. downloads the application program of the latest version to the installed memory card 14, and then uploads the version information of the program purchased by the user to the center 12. After such processing has been executed, the program of the latest version is stored in the memory card 14 installed in the KIOSK terminal 18 etc., while updating registration of a user's purchase version is carried out in the center 12, and the above-mentioned fee for the difference is charged by the center 12 to each user.

On the other hand, if the application program is not stored in the memory card 14, as shown in Fig. 4, the KIOSK terminal 18 etc. determines that this memory card 14 is a new commercial memory card, and then the KIOSK terminal 18 etc. makes sure the purchase intention of a user, after showing the user the fee for purchasing the program of the latest version, and also asks the user whether it's okay if the memory card 14 to be used with the information terminal device 10 is changed. It is noted that the confirmation for this change of the memory card 14 to be used is carried out because the number of the memory card 14 to be used with the information terminal device 10 is limited to only 1.

If the intention of the user for purchasing the latest program and for changing the memory card 14 to be used is confirmed under the condition where it is determined that the application program is not stored in the memory card 14, the KIOSK terminal 18 etc. uploads the version information of the program which the user purchased in the center 12 while downloading the application program of the latest version to be stored and a MID register program, to be explained later in detail, to the installed memory card 14. After such processing has been executed, the program of the latest version as well as the MID register program are stored in the memory card 14 installed in the KIOSK terminal 18 etc., while updating registration of a user's purchase version is carried out in the center 12, and the above-mentioned fee for the difference is charged by the center 12 to each user.

When the user wants to download the program to the information terminal device 10 from the memory card 14 in which the program of the latest version was stored by way of the KIOSK terminal 18 etc. as mentioned above, a user starts up the information terminal device 10 under the condition where the memory card 14 is installed in the memory card slot of the information terminal device 10. If the information terminal device 10 is started up in such a condition, by way of execution of the boot loader stored in the flash ROM 30, the application program stored in the installed memory card 14 will be downloaded from the memory card 14, and will be stored in the SDRAM 32. In this way, the program in the information terminal device 10 is updated to be the one of the latest version, and henceforth, the information terminal device 10 executes operations according to the newest program on the SDRAM 32, and functions as navigation equipment, karaoke equipment, etc.

Further, when the information terminal device 10 is started up under the condition where the MID register program is stored in the memory card 14 installed in the memory card slot of the information terminal device 10, the MID register program will be downloaded and stored in the SDRAM 32 before the application program and the DCM program are downloaded from the memory card 14. By this, the information terminal device 10 will memorize the serial number MID of the memory card 14 according to the MID register program before executing operations according to the newest program.

The information terminal device 10 uploads the version information of the program actually stored therein, after the application program and the DCM program are downloaded to the information terminal device 10 from the memory card 14 installed therein, by way of the automatic communication function etc., or at the first starting up time after that, or in response to a demand from the center 12. After such processing has been executed, updating registration of a user's use version will be carried out in the center 12. Henceforth, the same processing is executed at the time of loss of the memory card 14 having the serial number MID stored in the information terminal device 10 etc or at the time of version up.

Thus, according to the system of this embodiment, the program used with the information terminal device 10 can be upgraded using the memory card 14 attached to the information terminal device 10 or the commercial memory card 14, and thus the operation function of the information terminal device 10 can be changed. Under the present circumstances, since the fee for version up is a balance of the difference between the version already memorized in the center 12 and the latest version, the problem that the fee calculated with respect to an original version whenever version up is executed can be prevented.

Moreover, in the system of this embodiment, since the center 12 memorizes the version information of the program purchased by the user, it is possible to identify the version of the program which the user purchased even when the user loses the memory card 14 attached to the information terminal device 10. Therefore, the user does not need to pay a balance for the difference with respect to an initial version, that is to say, the user only has to pay the balance based on the version at the time of loss, when the user downloads the program of the latest version to the commercial memory card 14.

By the way, in the system which the program of the latest version is downloaded for pay to the memory card 14 by KIOSK terminal 18 etc., as is the case with this embodiment, in order to implement this business, it is necessary to prevent a program from being downloaded from a memory card 14 to two or more information terminal devices 10. For this reason, the system of this embodiment is characterized by realizing this function.

In this embodiment, the unique serial number MID is stored in the memory card 14 as mentioned above. Therefore, with an arrangement in which the serial number MID of the memory card 14 to be used is memorized and registered on the information terminal device 10, and correspondence between the registered serial number and the serial number of the memory card 14 installed in the memory card slot is checked when the memory card 14 is installed in the memory card slot, and the download operation to the information terminal device 10 from a memory card 14 is permitted only if both serial numbers correspond to each other, it becomes possible to prevent a program from being downloaded to the information terminal device 10 from the memory card 14, when the memory card 14 with a serial number other than the serial number MID registered on the information terminal device 10 is installed in the memory card slot.

For this reason, in this embodiment, the information terminal device 10 has in a non-volatile flash ROM 30 the serial number MID of the memory card 14 (memory card 14 which is usually attached to the information terminal device 10) to be used therewith. And the download to the information terminal device 10 from a memory card 14 is permitted, only when the registered serial number and the serial number of the memory card 14 installed in the memory card slot are in agreement under the state in which the memory card 14 is installed in the memory card slot. If both serial numbers are not in agreement on the other hand, the download to the information terminal device 10 from a memory card 14 installed is forbidden. Therefore, according to this embodiment, the memory card 14 used for downloading of a program to the information terminal device 10 can be limited to only one.

It is noted that the situation in which a program can be downloaded from 1 memory card 14 to two or more information terminal devices 10 may arise in an arrangement in which the registration of the serial number MID of the memory card 14 to the information terminal device 10 of his/her own is permitted even though the serial number MID of the memory card 14 has been already memorized and registered on other information terminal devices 10. Therefore, if the registration to the information terminal device 10 of the serial number MID of a memory card 14 is limited only to one time and forbidden henceforth, it becomes possible to prevent a program from being downloaded from a memory card 14 to two or more information terminal devices 10.

For this reason, in this embodiment, a program (MID register program) for registering the serial number MID of the memory card 14 into the information terminal device 10 is stored in the memory card 14 attached to the information terminal device 10 in the shipment phase of the information terminal device 10. It is noted that when the memory card 14 attached to the information terminal device 10 becomes lost etc., the MID register program is stored in the commercial memory card 14 through the KIOSK terminal 18 etc. from the center 12.

When the information terminal device 10 is started up with the memory card 14 installed therein, the information terminal device 10 stores the MID register program, and then according to the program the information terminal device 10 memorizes the serial number MID of the memory card 14 in the flash ROM 30, and, after this memorizing processing has been completed, deletes the MID register program in the memory card 14 and invalidates the MID register program wrote on the SDRAM 32.

With this processing, since a MID register program is no longer stored in the memory card 14 after the serial number MID has been already memorized to other information terminal devices 10, even if the information terminal device 10 of his/her own is installed with this memory card 14, it is impossible to store the serial number MID of that memory card 14 in the information terminal device 10 of his/her own. Moreover, since the information terminal device 10 in which the serial number MID of the memory card 14 to be used has been memorized cannot use the MID register program on the SDRAM 32 again, it is impossible to store the serial number MID of the memory card 14 in the information terminal device 10 of his/her own even if the information terminal device 10 is installed with the memory card 14 after that.

That is, the information terminal device 10 and the memory card 14 to be used for it are associated with a one-to-one relationship, and a serial number MID of 1 memory card 14 is surely prevented from being memorized in a plurality of the information terminal devices 10. Therefore, according to this embodiment, the situation which permits a program to be downloaded to two or more information terminal devices 10 from a memory card 14 can be prevented surely.

Moreover, in the system of this embodiment, the information terminal device 10 memorizes the serial number MID of the memory card 14 to be used therein and does not operate unless an application program is downloaded from the memory card 14 installed therein; however, in the manufacture phase of the information terminal device 10, it is necessary to execute a check operation for inspecting whether the operation is executed normally under the condition in which a flash ROM 30 has no serial number MID memorized therein.

For this reason, in this embodiment, a program (called "a checking program" hereafter) for operating the information terminal device 10, which permits the download to the SDRAM 32 under the condition in which the flash ROM 30 of the information terminal device 10 has no serial number MID memorized therein, is stored in a checking memory card 14 used in the plant of the information terminal device 10 etc. When the information terminal device 10 is started up in the state in which the memory card 14 which stores a checking program is installed in the information terminal device 10, even if the serial number is not stored in the flash ROM 30, the information terminal device 10 reads the checking program from the memory card 14, and memorizes it in the SDRAM 32. In this case, since the information terminal device 10 operates according to the program on the SDRAM 32, it becomes possible to check the operation of the information terminal device 10 even in the manufacture phase of the information terminal device 10.

It is noted that after the check of operations of the information terminal device 10 is completed in a plant etc. according to the above-mentioned procedure, the information terminal device 10 and the vehicle battery power source will be disconnected. If the information terminal device 10 and the vehicle battery power source are disconnected, the program on the SDRAM 32 will no longer be held, and it will disappear. Therefore, in this embodiment, since a program does not exist on the SDRAM 32 when the information terminal device 10 is shipped, it is possible to prevent the information terminal device 10 from operating according to the checking program stored in SDRAM 32 in a manufacture phase, after the shipment.

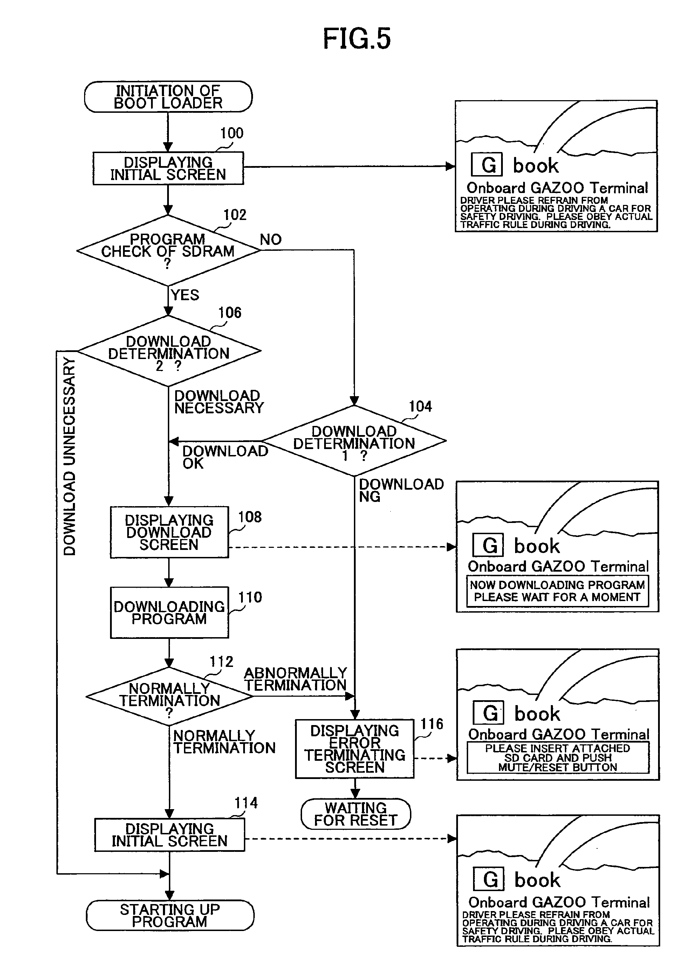

Fig. 5 shows the flow chart of an embodiment of a main routine which the information terminal device 10 executes in this embodiment in order to realize the above-mentioned function. The routine shown in Fig. 5 is a routine initiated repeatedly whenever the information terminal device 10 is started up. When the routine shown in Fig. 5 is initiated, the processing of step 100 is executed first. It is noted that the screen which appears in the display after each step executed is shown in Fig. 5 as necessary.

At step 100, the processing is executed for displaying the initial screen to tell a passenger its start up state, for example. At step 102, it is determined whether the program is stored in the SDRAM 32. If it is determined that the program is not stored in the SDRAM 32, which means this starting is the initial starting after the purchase or the disconnection of the vehicle battery power-source, the processing of step 104 is executed next. On the other hand, if it is determined that the program is stored in the SDRAM 32, which means this starting is the second starting or later, the processing of step 106 is executed next.

At step 104, it is determined whether the downloading of a program to the SDRAM 32 is permitted. Moreover, at step 106, it is determined whether it is necessary to download the program to the SDRAM 32. Consequently, when the download of the program to SDRAM 32 is determined to be permitted in step 104 or is determined to be necessary in step 106, the processing of step 108 is executed next. On the other hand, when it is determined that the download is not permitted in step 104, the processing of step 116 is executed next. When it is determined that the download is not necessary in step 106, the processing of this routine is ended and starting of the program stored in the SDRAM 32 is initiated.

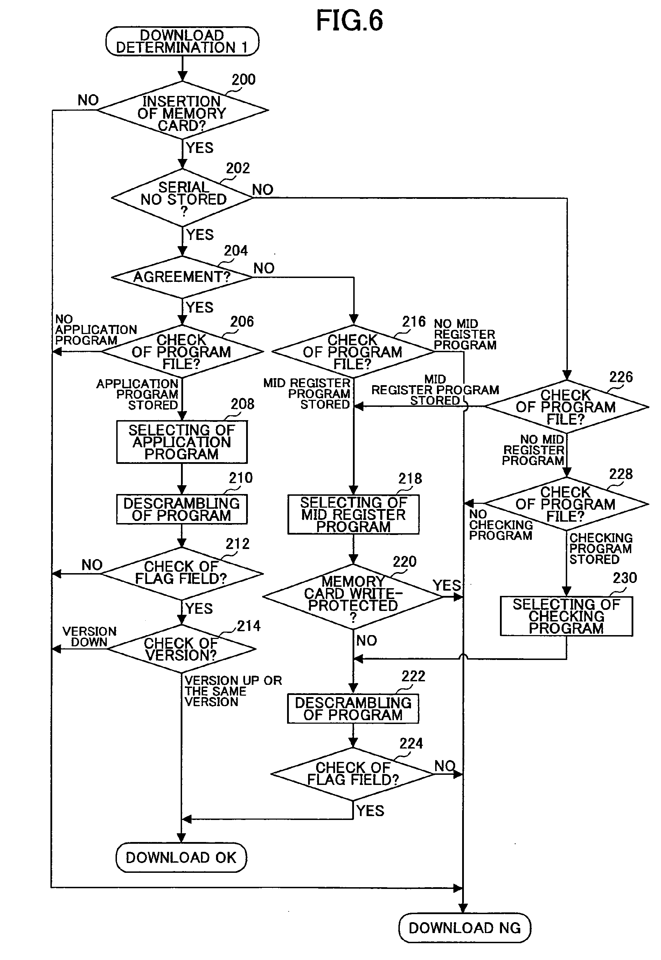

Fig. 6 shows the flow chart of an embodiment of a subroutine which the information terminal device 10 executes in this embodiment. The routine shown in Fig. 6 is a routine initiated repeatedly whenever the above-mentioned processing of step 104 shown in Fig. 5 is executed. When the routine shown in Fig. 6 is initiated, the processing of step 200 is executed first.

At step 200, it is determined whether the memory card 14 is inserted and installed in the memory card slot of the information terminal device 10. When it is determined that the memory card 14 is not installed, the processing of this routine is ended, prohibiting the download. On the other hand, when it is determined that the memory card 14 is installed, the processing of step 202 is executed next.

At step 202, it is determined whether the serial number MID of the memory card 14 to be used is stored in a flash ROM 30. When it is determined that the serial number MID is stored in the flash ROM 30, the processing of step 204 is executed next. On the other hand, when it is determined that the serial number MID is not stored in the flash ROM 30, the processing of step 226 is executed next.

At step 204, it is determined whether the serial number MID stored in the flash ROM 30 and the serial number MID of the memory card 14 installed in the memory card slot are in agreement. When it is determined that both are in agreement, the processing of step 206 is executed next. On the other hand, when it is determined that both are not in agreement, the processing of step 216 is executed next.

At step 206, the processing for checking the program stored in the installed memory card 14 is executed. Specifically, at step 206, it is determined whether the application program required to operate the information terminal device 10 is stored in the installed memory card 14. When it is determined that the application program has not been stored, the processing of this routine is ended, prohibiting the download. On the other hand, when it is determined that the application program is stored, the processing of step 208 is executed next.

At step 208, the processing for selecting the application program stored in the installed memory card 14 is executed. All the program files stored in a memory card 14 are scrambled for the sake of anti-copying. So, at step 210, descrambling processing to restore the file of the application program selected at step 208 is executed.

At step 212, the processing for checking the flag field to determine the justification of the application program descrambled at step 210 is executed. When it is determined that the descrambled program is not formal, the processing of this routine is ended, prohibiting the download. On the other hand, when it is determined that the descrambled program is formal, the processing of step 214 is executed next.

At step 214, it is determined whether the application program stored in the installed memory card 14 has the upgraded version or the same version. When it is determined that the application program stored in the installed memory card 14 is a downgraded version of the application program, the processing of this routine is ended, prohibiting the download. On the other hand, when it is determined that the application program is an upgraded version or the same version, the processing of this routine is ended, permitting the download.

If it is determined that the serial number MID stored in the flash ROM 30 in the above-mentioned step 204 and the serial number MID of the memory card 14 installed in the memory card slot are not in agreement, then in step 216 the processing for checking the program stored in the installed memory card 14 is executed. Specifically, at this step 216, it is determined whether the MID register program required for the information terminal device 10 to store the serial number MID of a memory card 14 is stored in the installed memory card 14. When it is determined that the MID register program is not stored, the processing of this routine is ended, prohibiting the download. On the other hand, when it is determined that the MID register program is stored, the processing for selecting the MID register program stored in the memory card 14 installed is executed next in step 218.

At step 220, it is determined whether the memory card 14 is write-protected. When an affirmative determination is made, the processing of this routine is ended, prohibiting the download. On the other hand, when a negative determination is made, the processing of step 222 is executed next.

As mentioned above, since the scramble processing is carried out to every program file stored in a memory card 14 for anti-copying, the descrambling processing to restore the file of the selected program is executed at step 222.

At step 224, the processing for checking the flag field to determine the justification of the program descrambled at step 222 is executed. When it is determined that the descrambled program is not formal, the processing of this routine is ended, prohibiting the download. On the other hand, when it is determined that the descrambled program is formal, the processing of this routine is ended, permitting the download.

If it is determined that the serial number MID is not stored in the flash ROM 30 in the above-mentioned step 202, the processing for checking the program stored in the installed memory card 14 is executed in step 226. Specifically, at step 226, it is determined whether the MID register program is stored in the installed memory card 14. When it is determined that the MID register program is stored, the processing after step 218 is executed next. On the other hand, when it is determined that the MID register program is not stored, processing of step 228 is executed next.

At step 228, the processing for checking the program stored in the installed memory card 14 is executed. Specifically, at this step 228, it is determined whether the checking program for operating the information terminal device 10, which is permitted to be downloaded to the SDRAM 32 in the state in which the serial number MID is not stored in the flash ROM 30 of the information terminal device 10, is stored in the installed memory card 14. When it is determined that the checking program is not stored, the processing of this routine is ended, prohibiting the download. On the other hand, when it is determined that the checking program is stored, the processing for selecting the checking program stored in the memory card 14 installed is executed next in step 230, and then processing after the above-mentioned step 222 is executed henceforth.

According to the routine shown in Fig. 6, it is possible to determine whether the download of any of the application program, the MID register program, and the checking program from the memory card 14 installed in the memory card slot is permitted, in the condition where the program is not stored in SDRAM 32.

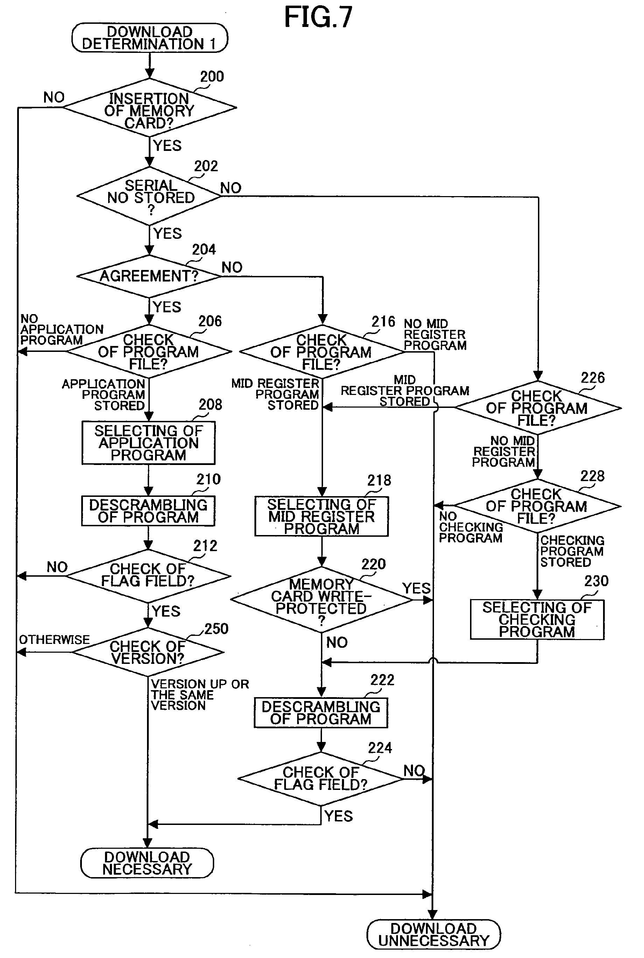

Fig. 7 shows a flow chart of an embodiment of a subroutine which the information terminal device 10 executes in this embodiment. The routine shown in Fig. 7 is a routine initiated repeatedly whenever processing of step 106 shown in above-mentioned Fig. 5 is executed. It is noted that in Fig. 7 the same reference numbers are given to the steps which execute the same processing as the steps in the routine shown in above-mentioned Fig. 6, and explanation for such steps is simplified or eliminated hereafter.

Referring to Fig. 7, when it is determined that the memory card 14 is not installed at step 200, the application program is not stored in the memory card 14 at step 206, the program after descrambling is not formal at step 212 or 224, the MID register program is not stored in the memory card 14 at step 216, the memory card 14 is write-protected at step 220, or the checking program is not stored in the memory card 14 at step 228, the processing of this routine is ended, judging that it is not necessary to download.

When it is determined that the descrambled program is formal at step 212, the processing of step 250 is executed next. At step 250, it is determined whether the application program stored in the installed memory card 14 is upgraded as compared with the program already memorized in the SDRAM 32. When it is determined that the application program stored in the memory card 14 installed is other than a version up one, the processing of this routine is ended, judging that it is not necessary to download. On the other hand, when it is determined that the application program is upgraded one, the processing of this routine is ended, judging that it is necessary to download.

According to the routine shown in above-mentioned Fig. 7, it is possible to determine whether it is necessary to download any of the application program, the MID register program, and the checking program from the memory card 14 installed in the memory card slot, in the condition where the program is stored in SDRAM 32.

When it is determined that the program permitted to be downloaded to SDRAM 32 at step 104 shown in above-mentioned Fig. 5, or when it is determined that it is necessary to download the program to the SDRAM 32 at step 106, the processing is executed in step 108 for displaying the screen which tells a passenger about the status, for example, a status under downloading.

At step 110, the processing for downloading the application program, the MID register program, or the checking program from the memory card 14 installed in the memory card slot is executed. After the processing of step 110 has been executed, the read program is stored in the SDRAM 32.

At step 112, it is determined whether the download of the program is completed normally. When it is determined that the download is completed normally, the processing of step 114 is executed next. On the other hand, when it is determined that the download is terminated abnormally, or when it is determined that it is impossible to download at the above-mentioned step 104, the processing of step 116 is executed next.

At step 114, the processing for displaying the initial screen on the display is executed. When it is determined that the processing of this step 114 is completed, or when it is determined that it is not necessary to download at step 106, the program stored in SDRAM 32 is initiated and processing of this routine is ended.

At step 116, the processing for displaying an error termination screen on the display is executed. If the processing of this step 116 is executed, the information terminal device 10 will be in the state of waiting for reset starting.

According to the routine shown in above-mentioned Fig. 5, it is possible to read the application program, the MID register program, or the checking program from the memory card 14 installed in the memory card slot, memorize it in the SDRAM 32 and initiate the program stored in the SDRAM 32, as needed, when the boot loader is executed at starting up of the information terminal device 10.

Specifically, under the situation where the serial number MID of the memory card 14 to be used at the time of boot loader execution is not memorized in the flash ROM 30, or under the situation where the serial number MID is stored in the flash ROM 30, and the serial number MID and the serial number MID of the memory card 14 installed in the memory card slot are not in agreement, if the MID register program is stored in the memory card 14 installed in the memory card slot, it is possible to read the MID register program from the memory card 14 first, memorize it in the SDRAM 32, and then initiate the MID register program.

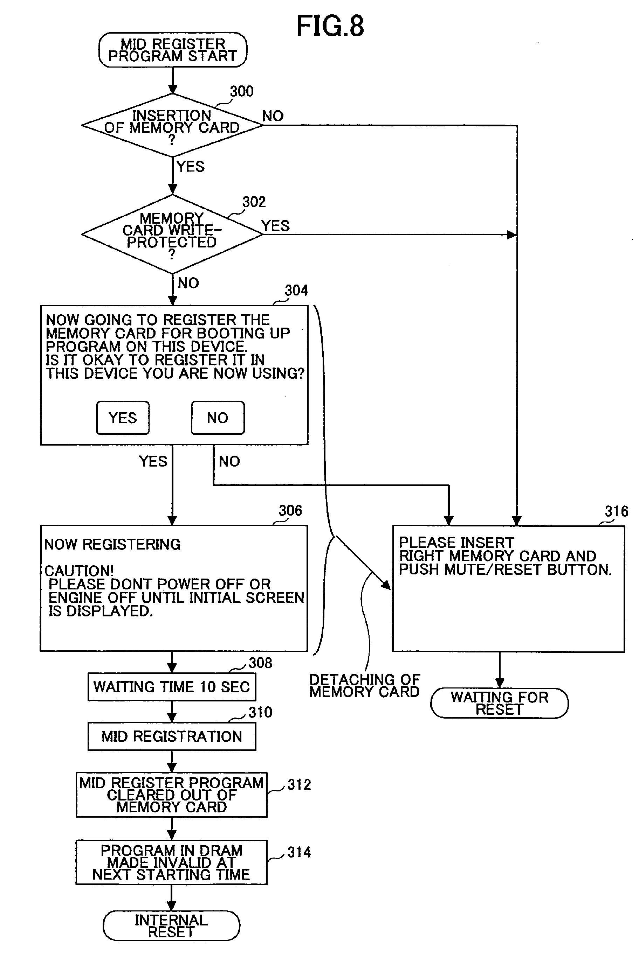

Fig. 8 shows a flow chart of a control routine executed when the MID register program is initiated in the information terminal device 10 of this embodiment. The routine shown in Fig. 8 is a routine initiated repeatedly whenever the MID register program is initiated. When the routine shown in Fig. 8 is initiated, the processing of step 300 is executed first.

At step 300, it is determined whether the memory card 14 is inserted and installed in the memory card slot of the information terminal device 10. When it is determined that the memory card 14 is not installed, the processing of step 316 is executed next. On the other hand, when it is determined that the memory card 14 is installed, the processing of step 302 is executed next.

At step 302, it is determined whether the memory card 14 is write-protected. When an affirmative determination is made, the processing of step 316 is executed next. On the other hand, when a negative determination is made, the processing of step 304 is executed next.

At step 304, the processing for displaying the screen on the display is executed for indicating the current status that the serial number MID of the memory card 14 installed in the memory card slot is now going to be registered and memorized in the non-volatile flash ROM 30 of the information terminal device 10, and then it is determined whether the registration is permitted by way of a touch operation to the display by the passenger, after displaying the screen to ask the passenger whether its registration and memorization is okay. When it is determined that registration is permitted, the processing of step 306 is executed next. On the other hand, when it is determined that registration is not permitted, processing of step 316 is executed next.

At step 306, the processing for displaying the screen on a display is executed for informing the passenger that the serial number MID is now being registered. At step 308, the processing for sustaining the screen in step 306, for example, for 10 seconds, is executed. At step 310, the processing is executed for actually memorizing the serial number MID, which should be memorized in the flash ROM 30 by this MID register program, in the flash ROM 30.

At step 312, the processing is executed for deleting the MID register program from the memory card 14 installed in the memory card slot. After the processing of this step 312 has been executed, the MID register program is not stored in the installed memory card 14 henceforth.

At step 314, the processing is executed for invalidating the MID register program stored in the SDRAM 32 for the next starting up time. After the processing of this step 314 has been executed, even when the information terminal device 10 is started up henceforth, the MID register program in the SDRAM 32 will not be executed. After the processing of this step 314 is completed, internal reset of the information terminal device 10 is carried out, and is started up under the state where the serial number MID of the memory card 14 to be used is registered, and then processing of this routine is ended.

At step 316, the processing for displaying the screen is executed for instructing the passenger to insert the right memory card 14 and push a MUTE/RESET carbon button in order to urge the passenger to do the reset starting. After the processing of this step 316 has been executed, the information terminal device 10 is in the condition of waiting for reset starting.

According to the routine shown in Fig. 8, the information terminal device 10 can memorize the serial number MID of the installed memory card 14 in the flash ROM 30 and, after completing the memorization processing, delete the MID register program in the installed memory card 14, and invalidate the MID register program read out to the SDRAM 32.

In other words, even if the memory card 14 stores the MID register program, the memory card 14 no longer holds the MID register program after the serial number MID of its own has been stored in the information terminal device 10. The serial number MID of the memory card 14 is stored in the information terminal device 10 according to a MID register program. Therefore, even if the memory card 14 having the serial number MID already memorized in the information terminal device 10 is installed in other information terminal devices 10 afterward, it is impossible to store the serial number MID of the memory card 14 in the other information terminal devices 10.

Although the information terminal device 10 reads the MID register program from the memory card 14 installed therein, it cannot use the MID register program after having memorized the serial number MID according to the MID register program. The information terminal device 10 memorizes the serial number MID according to the MID register program. Therefore, even if the information terminal device 10 having the serial number MID of the memory card 14 to be used and that is memorized therein is installed with other memory cards 14, it is impossible to store the serial number MID of the other memory cards 14 in the information terminal device 10. In this way, in the system of this embodiment, it is possible to surely prevent a serial number MID of one memory card 14 from being stored in two or more information terminal devices 10.

In this embodiment, the routine shown in Fig. 8 is executed, under the situation where the serial number MID of the memory card 14 to be used is not stored in the flash ROM 30, under the situation where the serial number MID of the flash ROM 30 and the serial number MID of the memory card 14 installed in the memory card slot are not in agreement, or under the situation where the MID register program is stored in the memory card 14 installed in the memory card slot.

Therefore, when the serial number is not stored in the flash ROM 30 of the information terminal device 10, the serial number MID of the memory card 14 to be used for the flash ROM 30 can be memorized, on condition that the MID register program is stored. Moreover, when the serial number is already stored in the flash ROM 30, the serial number MID of the memory card 14 to be used can be memorized in the flash ROM 30 again, on condition that the serial number MID in the flash ROM 30 and the serial number MID of the memory card 14 installed are not in agreement and the MID register program is stored in the memory card 14. That is, after the serial number MID is already stored in the flash ROM 30, except in cases where the serial number MID and the serial number MID of the memory card 14 installed are not in agreement and the MID register program is stored in the memory card 14, it is possible to prevent the serial number MID of the memory card 14 installed afterward from being stored in the flash ROM 30.

In this embodiment, the storing operation of the serial number MID of the memory card 14 to the information terminal device 10 with which it is to be used is executed before the download operation of the application program from the memory card 14. Specifically, once the serial number MID of the memory card 14 to be used for the information terminal device 10 is memorized, henceforth, when the serial number of the memory card 14 installed in the memory card slot is that serial number MID, the download operation of the application program is permitted for the information terminal device 10, and when the serial number of the installed memory card 14 is not that serial number MID, the download operation of the application program is forbidden. In this case, the number of the memory card 14 available to download an application program to each information terminal device 10 is limited to one. That is, each information terminal device 10 can read an application program only from the specific memory card 14.

As mentioned above, in the system of this embodiment, a serial number MID of one memory card 14 is surely prevented from being stored in two or more information terminal devices 10. Therefore, according to the system of this embodiment, the information terminal device 10 and the memory card 14 can be associated with a one-to-one relationship, and thus it is possible to surely prevent a serial number MID of one memory card 14 from being stored in two or more information terminal devices 10.

Consequently, according to the system of this embodiment, in the case where the information terminal device 10 is provided with an application program for pay through a memory card 14 for every version up, such a version up business can be practiced effectively, since each user has to download the upgraded application program to the information terminal device 10 of his/her own using the memory card 14 of his/her own.

Here, in the case where the information terminal device 10 is installed with the memory card 14 corresponding to other information terminal devices 10 and an application program is downloaded from the memory card 14, inconvenience arises when the version of the application program stored in other memory cards 14 is newer than the version of the application program stored in the memory card 14 of its own. Specifically, in such case, if the application program is downloaded to the information terminal device 10 from the memory card 14 of its own when the application program from the other memory cards 14 volatilizes from the SDRAM 32, the application program of the information terminal device 10 will be versioned down, resulting in failures such as loss of compatibility of data. To the contrary, according to the system of this embodiment, since the application program is not downloaded from other memory cards 14 which are not associated with the information terminal device 10, it is possible to avoid the above-mentioned failure.

Moreover, in this embodiment, even in the situation where the serial number MID of the memory card 14 to be used is not memorized in the information terminal device 10, if the checking program is stored in the installed memory card 14, the information terminal device 10 reads the checking program from the memory card 14 and memorizes it in the SDRAM 32, and then operates according to the checking program. The checking program is a program for checking the operation of the information terminal device 10 in a plant etc., and the memory card 14 having the checking program stored therein is used in a plant etc.

Therefore, according to the system of this embodiment, even under the situation that the serial number MID of the memory card 14 to be used is not memorized in the flash ROM 30 of the information terminal device 10 , if the memory card 14 having the checking program stored therein is installed in the memory card slot of the information terminal device 10, it is possible to read the checking program from the memory card 14 to the SDRAM 32 of the information terminal device 10, and operate the information terminal device 10 according to the checking program. Thus, even in the manufacture phase of the information terminal device 10, it is possible to check the operation of the information terminal device 10.

Furthermore, in this embodiment, after the program has been downloaded to the information terminal device 10 from the memory card 14 installed in the memory card slot, the version information of the program actually stored in the SDRAM 32 is uploaded to the center 12. When the version information of the program actually stored in the SDRAM 32 from the information terminal device 10 is received, the center 12 memorizes it in the storage section thereof, associating the version information with the member number of the user of the information terminal device 10.

After that, the center 12 presents the version information of the program of the user memorized in the storage section in response to the inquiry of the version information from KIOSK terminal 18 etc., and when the program of the latest version is downloaded to a memory card 14 through KIOSK terminal 18 etc. by the user, the center 12 charges the fee to the user according to the difference between the version of the program memorized in the storage section and the version of the newest program.

Thus, in this embodiment, the version information of the program stored in SDRAM 32 of the information terminal device 10 is managed in the center 12. Therefore, according to this embodiment, the center 12 can appropriately charge the fee for version up to the user. Thus, for example, even when the program becomes lost from SDRAM 32 of the information terminal device 10, the user only has to pay the fee based on the version information of the program at the time of loss, in order to read the program from the center 12 to the information terminal device 10, and if the center 12 is able to distribute any version of the program, it is also possible to read the program of the same version at the time of loss from the center 12 to the information terminal device 10.

It is noted that, in the above-mentioned embodiment, "storage medium" recited in the claims corresponds to the memory card 14, the term "identification information" recited in the claims corresponds to the serial number MID of a memory card 14, "first internal memory" recited in the claims corresponds to the non-volatile flash ROM 30, "predetermined information" recited in the claims corresponds to the application program of the information terminal device 10, "second internal memory" recited in the claims corresponds to SDRAM 32 powered by a vehicle battery power source, "information about modification of predetermined information" recited in the claims corresponds to the version up information on a program, "identification information storing program" recited in the claims corresponds to the MID register program, "terminal operation program" recited in the claims corresponds to the boot loader for executing the routines shown in Figs. 5 - 7, and "predetermined information changing program" recited in the claims corresponds to the checking program.

Further, "identification information storing step" recited in the claims is implemented by the processing of step 310 in the routine shown in Fig. 8, "storing operation control means" or "storing operation controlling step" recited in the claims is implemented by the routines shown in Figs. 5 - 7, "predetermined information storing step" recited in the claims is implemented by memorizing the application program from the installed memory card 14 in the SDRAM 32, "storage information controlling means" or " storage information controlling step" recited in the claims is implemented by memorizing the application program from a memory card 14 in the SDRAM 32 after executing steps 204 - 214 or steps 206 - 250, "information executing means" or "information executing step" recited in the claims is implemented by operating according to the application program stored in the SDRAM 32, "uploading means" or "uploading step" recited in the claims is implemented by uploading the version information of the program in the center 12 after memorizing the application program from the installed memory card 14 in the SDRAM 32, executed by the main CPU of the information terminal device 10.

Further, in the above-mentioned embodiment, " first operation" recited in the claims 19 is implemented by storing the serial number MID from the installed memory card 14, "second operation" recited in the claims 19 is implemented by memorizing the read serial number MID in the flash ROM 30, "program reading means" recited in the claims is implemented by reading a MID register program from the installed memory card 14, "identification information storing means" recited in the claims is implemented by memorizing the read MID register program in the SDRAM 32, and "program deleting means" recited in the claims is implemented by deleting the MID register program after memorizing the read serial number MID in the flash ROM 30 according to the MID register program, executed by the main CPU of the information terminal device 10.

In the above-mentioned embodiment, "first operation" recited in the claims 24 is implemented by executing processing of step 204, "second operation" recited in the claims 24 is implemented by memorizing the application program from a memory card 14 in the SDRAM 32 after executing steps 204 - 214 or steps 206 - 250, "first operation" recited in the claims 25 is implemented by executing processing of step 202, "second operation" recited in the claims 25 is implemented by memorizing the MID register program or the checking program read from the installed memory card 14 in the SDRAM 32, and "third operation" recited in the claims 25 is implemented by operating according to the MID register program or the checking program stored in the SDRAM 32, executed by the main CPU of the information terminal device 10.

Furthermore, in the above-mentioned embodiment, "information management means" recited in the claims is implemented by the center 12 when the center 12 memorizes the version information of the program stored in the SDRAM 32 of the information terminal device 10 in the storage section, "information providing means" recited in the claims is implemented by the center 12 when the center 12 provides the version information to the KIOSK terminal 18 etc. in response to the inquiry of the version information from the user using the KIOSK terminal 18 etc.

By the way, in the above-mentioned embodiment, although the memory card 14 is used as a storage medium, it is also possible to use other storage media, such as CD-ROM and FD.

Moreover, in the above-mentioned embodiment, when the serial number MID of the memory card 14 installed in the memory card slot of the information terminal device 10 and the serial number MID stored in the flash ROM 30 of the information terminal device 10 are not in agreement, the download of the program from the installed memory card 14 is forbidden; however it is also possible to permit the download of data or programs other than specific programs, such as map information and music information, stored in the installed memory card 14.

Furthermore, in the above-mentioned embodiment, when the memory card 14 is detached the memory card slot during operation or when the memory card 14 is not installed in the information terminal device 10 at the starting up time, it may be preferred to give a warning on the display etc. to urge the passenger to install the memory card 14 in the memory card slot, and stop the operation of the information terminal device 10 not to receive operation by the passenger. According to this configuration, since the operation with the memory card 14 installed in the memory card slot is encouraged and the installation of the memory card 14 is promoted at the time of operation of the information terminal device 10, loss of the memory card 14 used for the information terminal device 10 is prevented effectively. In this case, the "installation urging means" or "installation urging step" recited in the claims is implemented by giving the warning on the display etc. to urge the passenger to install the memory card 14 in the memory card slot, and stopping the operation, executed by the main CPU of the information terminal device 10.

It is noted that, in this configuration, if the warning for urging the installation of the memory card 14 into the memory card slot is given to the passenger, and then the operation of the information terminal device 10 is stopped, it may be preferred to restart the information terminal device 10 not only when the memory card 14 having the program stored therein is installed but also when a memory card 14 not having the program stored therein is installed. In this case, since the memory card 14 not having a program but only data stored therein can be used in the information terminal device 10, convenience for a user is improved in operating the information terminal device 10.

Furthermore, in the above-mentioned configuration, the operation of the information terminal device 10 is stopped if the memory card 14 is not installed during operation; however, during this stopping period, it is also good to continue measuring the positions or distances as navigation equipment, and periodically communicating with the external facilities etc., in order to activate the always necessary functions in information terminal device 10.

## Claims

1. An information terminal device comprising a first internal memory for storing identification information to identify a storage medium, which identification information is read from the storage medium, the storage medium being detachably installed in the information terminal device.

2. The information terminal device as claimed in claim 1 further comprising:
storing operation control means for permitting a storing operation of storing the identification information in the first internal memory if the identification information is not stored in the first internal memory, and for forbidding or limiting the storing operation after the identification information has been stored in the first internal memory.

3. The information terminal device as claimed in claim 2, wherein the storing operation control means permits the storing operation of storing the identification information in the first internal memory if the identification information is not stored in the first internal memory, before predetermined information different from the identification information is read from the storage medium.

4. The information terminal device as claimed in claim 3, wherein the storing operation control means also permits the storing operation of storing the identification information in the first internal memory under a predetermined condition even if the identification information is stored in the first internal memory.

5. The information terminal device as claimed in any of claims 1-4 further comprising:
a second internal memory for storing predetermined information different from the identification information read from the storage medium which is detachably installed in the information terminal device; and
storage information controlling means which replaces the predetermined information stored in the second internal memory with predetermined information on the storage medium now installed in the information terminal device if the identification information of the storage medium now installed corresponds to the identification information already stored in the first internal memory.

6. The information terminal device as claimed in claim 5 further comprising:
information executing means which executes an operation according to the predetermined information stored in the second internal memory,
wherein the storage information controlling means causes the second internal memory to store the predetermined information on the storage medium now installed in the information terminal device under a predetermined condition when the identification information is not stored in the first internal memory.

7. The information terminal device as claimed in claim 5 further comprising:
uploading means which supplies information about modification of the predetermined information in the second internal memory to a predetermined center.

8. The information terminal device as claimed in claim 5 further comprising:
installation urging means which executes an operation to urges the installation of the storage medium when the installed storage medium, from which the predetermined information is read, is detached from the information terminal device.

9. The information terminal device as claimed in claim 8, wherein the installation urging means stops at least a part of operation.

10. A method of operating an information terminal device comprising:
identification information storing step for storing identification information for identifying a storage medium in a first internal memory of the information terminal device, which identification information is read from the storage medium, the storage medium being detachably installed in the information terminal device.

11. The method of operating an information terminal device as claimed in claim 10 further comprising:
a storing operation controlling step for permitting a storing operation of storing the identification information in the first internal memory in the identification information storing step if the identification information is not stored in the first internal memory, and for forbidding or limiting the storing operation in the identification information storing step after the identification information has been stored in the first internal memory.

12. The method of operating an information terminal device as claimed in claim 11, wherein the storing operation controlling step permits the storing operation of storing the identification information in the first internal memory if the identification information is not stored in the first internal memory, before predetermined information different from the identification information is read from the storage medium.

13. The method of operating an information terminal device as claimed in claim 12, wherein the storing operation controlling step also permits the storing operation of storing the identification information in the first internal memory under a predetermined condition even if the identification information is stored in the first internal memory.

14. The method of operating an information terminal device as claimed in any of claims 10-13 further comprising:
a predetermined information storing step for storing predetermined information, which is different from the identification information, in a second internal memory of the information terminal device, which predetermined information is read from a storage medium which is detachably installed in the information terminal device; and
a storage information controlling step for replacing the predetermined information stored in the second internal memory by the predetermined information storing step with predetermined information on the storage medium now installed in the information terminal device if the identification information of the storage medium now installed corresponds to the identification information already stored in the first internal memory.

15. The method of operating an information terminal device as claimed in claim 14 further comprising:
an information executing step for operating the information terminal device according to the predetermined information stored in the second internal memory,
wherein the storage information controlling step causes the second internal memory to store the predetermined information on the storage medium now installed in the information terminal device under a predetermined condition when the identification information is not stored in the first internal memory.

16. The method of operating an information terminal device as claimed in claim 14 further comprising:
an uploading step for supplying information about modification of the predetermined information in the second internal memory to a predetermined center from the information terminal device.

17. The method of operating an information terminal device as claimed in claim 14 further comprising:
an installation urging step for executing an operation to urges the installation of the storage medium when the installed storage medium, from which the predetermined information is read, is detached from the information terminal device.

18. The method of operating an information terminal device as claimed in claim 17, wherein the installation urging step stops at least a part of operation of the information terminal device.

19. An identification information storing program which is a computer readable program for causing an information terminal device in which a storage medium is detachably installed to execute operations comprising:
a first operation of reading identification information from the storage medium for identifying the storage medium; and
a second operation of storing the identification information read in the first operation in an internal memory.

20. A storage medium on which the identification information storing program as claimed in claim 19 is stored.

21. An information terminal device comprising:
program reading means for reading the identification information storing program from the storage medium as claimed in claim 19 which is detachably installed in the information terminal device;
predetermined information storing means for storing a predetermined information read by the program reading means in an internal memory according to the predetermined information storing program; and
program deleting means for deleting the predetermined information storing program on the storage medium after the predetermined information has been stored in the internal memory by the predetermined information storing means.

22. The information terminal device as claimed in claim 21, wherein the program deleting means also deletes the identification information storing program read from the storage medium by the program reading means.

23. The information terminal device as claimed in claim 21, wherein the program reading means reads the identification information storing program before predetermined information different from the identification information is read from the storage medium.

24. A predetermined information changing program which is a computer readable program for causing an information terminal device in which a storage medium is detachably installed to execute operations comprising:
a first operation of determining whether identification information for identifying the storage medium, which has already been stored in a first internal memory of the information terminal device, corresponds to the identification information of the storage medium now installed in the information terminal device; and
a second operation of replacing predetermined information, which is different from the identification information, stored in the second internal memory with predetermined information on the storage medium now installed in the information terminal device if both identification information is determined to corresponds each other in the first operation.

25. A terminal operating program which is a computer readable program for causing an information terminal device in which a storage medium is detachably installed to execute operations comprising:
a first operation of determining whether identification information for identifying the storage medium is stored in a first internal memory;
a second operation of storing predetermined information on the storage medium, which is now installed in the information terminal device, in a second internal memory of the information terminal device under a predetermined condition when it is determined in the first operation that the identification information is not stored in the first internal memory; and
a third operation of causing the information terminal device to operate according to the predetermined information stored in the second internal memory by way of the second operation.

26. A storage medium on which the terminal operating program as claimed in claim 25 is stored.

27. A center comprising:
information management means for storing information supplied from an information terminal device, said information being about modification of predetermined information stored in an internal memory of an information terminal device,
information providing means for providing the information about modification of the predetermined information managed under the information management means under a predetermined condition.
